# EUROPEAN PATENT SPECIFICATION

(11) **EP 0 997 490 B1**
(45) Date of publication and mention of the grant of the patent: **26.11.2003**
(21) Application number: 99308472.2
(22) Date of filing: 26.10.1999
(51) Int. Cl.: C08K 3/04, C08K 9/06, C08K 9/02, C08L 21/00, B60C 1/00

(54) **Rubber composition for tyre tread**
Kautschukmischung für Reifenlauffläche
Composition de caoutchouc pour bande de roulement

(30) Priority: 27.10.1998 JP 30570098
(43) Date of publication of application: 03.05.2000
(73) Proprietor: Sumitomo Rubber Industries Limited, Kobe-shi, Hyogo-ken (JP)
(72) Inventor: Mizuno, Yoichi, Karumukasiore 306, Osaka-shi, Osaka-fu (JP); Uchia, Mamoru, Akashi-shi, Hyogo-ken (JP)
(74) Representative: Stewart, Charles Geoffrey

(56) References cited:
- WO-A-96/37547
- WO-A-98/45361

## Description

The present invention relates to a rubber composition for a tyre tread having compatibility between low fuel consumption and abrasion resistance, especially abrasion resistance under severe conditions.

Recently a tyre for low fuel consumption has been developed by decreasing rolling resistance to meet the demand for low fuel consumption of vehicles for prevention of global warming. Generally, in order to decrease the rolling resistance it is proposed to lower the hysteresis of the rubber composition for the tyre tread. One method of doing this is to decrease the amount of carbon black as the reinforcing agent in a rubber composition for a tyre or to substitute silica for carbon black as the reinforcing agent.

However, in the tread of a heavy duty tyre employed for a truck or bus tyre, the abrasion resistance becomes remarkably low with decreasing the amount of carbon black. Also it is a problem that a tyre employing silica as reinforcement is low in abrasion resistance under severe operating conditions.

Accordingly there has been investigated the method of changing the vulcanising accelerator or increasing the amount of vulcanising accelerator. But they are not sufficiently successful since there arises a problem that the rubber property after vulcanisation is changed.

As another measure, carbon black surface-treated with silica has been developed, wherein the silica adheres to the carbon black and the carbon black then has the characteristics of both carbon black and silica as fillers. This was disclosed in Japanese Patent No 2788212 where the tread compound was obtained by mixing the surface-treated carbon black with a rubber component. However there still is a problem that the performance thereof is not sufficient.

In order to solve the above-mentioned problems, in the case of the surface-treated carbon black used in the composition described in the above-mentioned publication, the present inventors thought that the effect obtained by employing the carbon black was not sufficiently revealed, since the surface of the carbon black was coated with silica, the active point of the carbon black was lost, and the property thereof was approximately equal to that in sole use of silica.

WO 96/37547 discloses the use of a silicon treated carbon black in a compound which optionally can included a coupling agent. PCT WO 98/45361 discloses an elastomer to which an aggregate comprising a carbon phase and a silicon-containing species phase is added. Both of these disclosures however are general and do not give the desired improvement in properties required for a tyre tread.

Therefore the present inventors decided that the effect thereof would be more effective than the carbon black surface-treated silica, if a carbon black is employed, wherein carbon black and silica are three-dimensionally mixed in one particle and the surface of the particle has two regions comprising a silica region and a carbon black region.

Accordingly the present invention provides a rubber composition for a tyre tread as set out in Claim 1.

It should be noted that carbon black containing silica is a material in which carbon black and silica are three-dimensionally mixed in one particle and the surface of the particle has two regions comprising a silica region and a carbon black region.

Yet another aspect provides a heavy duty tyre, which is obtained by employing the rubber composition for a tyre tread as mentioned above.

Further aspects of the invention will be apparent from the following description of embodiments in which:
Figure 1 is a diagram of a particle in which carbon black and silica are three-dimensionally mixed in one particle;
Figure 2 is a graph showing a relation between rolling resistance and abrasion road test in Examples 1 to 11 and Comparative Examples 1 to 7; and
Figure 3 is a graph showing a relation of the abrasion resistance under low severe condition and high severe condition in Examples 1 to 4 and Comparative Examples 1 to 4.

There is no particular limitation for the rubber component employed in the present invention, as long as it has been conventionally employed in a tyre tread compound.

Examples therefor are, for example, natural rubber (NR), various kinds of a butadiene rubber (BR), various kinds of a styrene-butadiene copolymer rubber (SBR), polyisoprene rubber (IR), butyl rubber (IIR), acrylonitrile-butadiene rubber, chloroprene rubber, ethylene-propylene copolymer rubber, ethylene-propylene-diene copolymer rubber, styreneisoprene copolymer rubber, styrene-isoprene-butadiene copolymer rubber, isoprene-butadiene copolymer rubber, chlorosulfonated polyethylene, acrylic rubber, epichlorohydrin rubber, polysulfide rubber, silicone rubber, fluororubber and urethane rubber, and the like. These may be employed solely or in a combination use of two or more thereof. There is no particular limitation for the blend ratio thereof. NR, BR, SBR and IR are preferably used from the viewpoint of obtaining abrasion resistance of the rubber composition for a tread suitable for use in a truck or bus tyre under severe running conditions.

Carbon black containing silica (hereinafter referred to as "CB containing silica") employed in the present invention is a particle, wherein both carbon black and silica are three-dimensionally entangled in one particle and both are exposed on the surface of the particle as mentioned above. Since the CB containing silica has the above-mentioned structure, it has a carbon black region, which has a few functional groups on the surface and low capability of chemically bonding to a polymer, and a silica region, which has many functional groups on the surface and the capability of chemically bonding to a polymer through a bonding or coupling agent to lower hysteresis. It becomes possible to obtain a tread for a truck or bus tyre having compatibility between decrease of rolling resistance (low fuel consumption) and abrasion resistance under severe conditions by employing the carbon black containing silica, which is prepared by mixing carbon black having high abrasion resistance with silica and is highly capable of chemically bonding to a polymer.

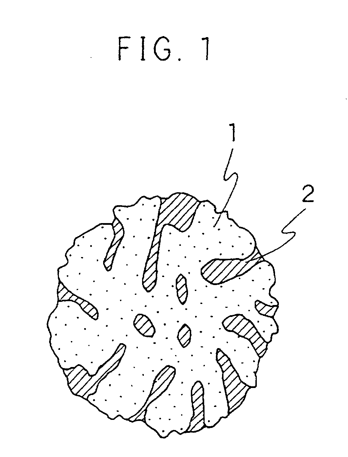

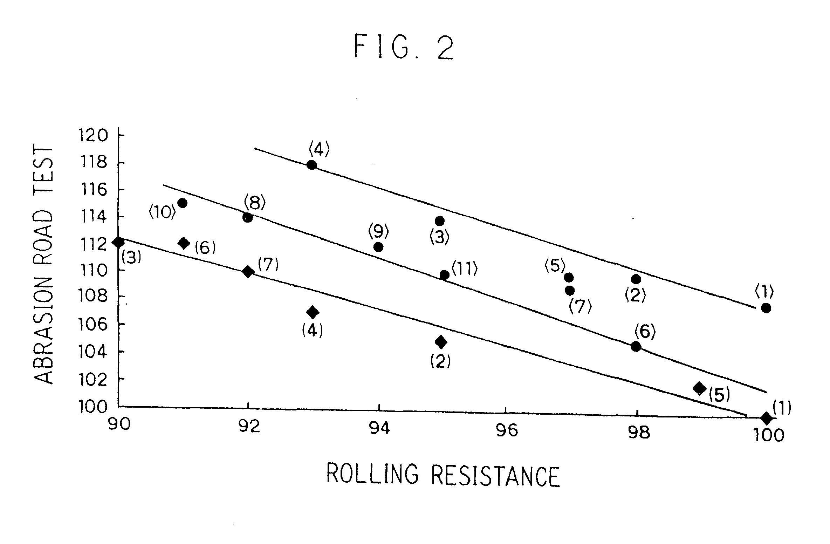

Figure 1 is a diagram of a particle in which carbon black and silica are three-dimensionally mixed in one particle. In Figure 1, 1 and 2 show a carbon region and a silica region, respectively.

In the CB containing silica, both carbon region 1 and silica region 2 have region exposed to the surface of a particle, so that almost all of the carbon black region is not coated with silica. This is different from the case of the carbon black surface-treated with silica. Therefore, abrasion resistance under severe conditions, which is a characteristic of the composition using carbon black, becomes sufficiently excellent. Also it is possible to lower the rolling resistance, since the CB containing silica has more surface active points than the conventional carbon black and so bound rubber is increased.

There is no particular limitation for the preparation process of the CB containing silica, and a one-step preparation process by simultaneously reacting an organosiloxane with material oil is preferably available. The above-mentioned preferable process was disclosed in, for example, WO 96/37547 in detail.

The mixture ratio of silica and carbon black in the CB containing silica is preferably 0.1 to 25% by weight, more preferably 0.5 to 10% by weight and particularly 2 to 6% by weight from the viewpoint of revealing characteristics of both carbon black and silica in a good balance.

Carbon black employed in the present invention is a component to ensure reinforcement.

There is no particular limitation for the above-mentioned carbon black, for example, carbon black generally used for a conventional rubber as an additive may be employed. Examples thereof are furnace black, acetylene black, thermal black, channel black, graphite and the like.

Silica employed in the present invention is a component to ensure reinforcement.

As the above-mentioned silica, silica generally used for a conventional rubber as an additive may be employed. Examples thereof are, for example, anhydrous silica, hydrous silica, colloidal silica and precipitated silica disclosed in Japanese Unexamined Patent Publication No 62838/1985. They can be employed solely or in a combination use of two or more thereof.

There is no particular limitation for the specific surface area of the above-mentioned silica, for example, a specific area for CTAB adsorption (hereinafter referred to as CTAB) is preferably 100 to 200 m²/g and a specific surface area for BET nitrogen adsorption (hereinafter referred to as BET) is preferably 100 to 250 m²/g.

Examples of the above-mentioned silica are, for example, Nipsil VN3 (available from Nippon Silica Co Ltd; CTAB 144 m²/g; BET 210 m²/g), Nipsil AQ (available from Nippon Silica Co Ltd; CTAB 150 m²/g; BET 227 m²/g), Ultrasil VN3 (available from Degussa Co Ltd; CTAB 165 m²/g; BET 172 m²/g) and the like.

The mixing amounts of the CB containing silica, the carbon black and the silica based on the above-mentioned rubber component are 10 to 55 parts by weight preferably 20 to 45 parts by weight, of the CB containing silica, 40 to 60 parts by weight, preferably 45 to 55 parts by weight, of the total amount of the carbon black and/or the silica and the CB containing silica. Abrasion resistance becomes low with decreasing the amount of the CB containing silica, since the above-mentioned efficiency is not sufficiently obtained by employing the CB containing silica. Rolling resistance of a tyre becomes high with increasing the amount of the CB containing silica. And abrasion resistance becomes low with decreasing the total amount of the carbon black and/or silica and the CB containing silica, and rolling resistance becomes high with increasing the total amount.

The total amount of the carbon black and/or the silica and the CB containing silica is 40 to 60 parts by weight. The amount of the carbon black and/or silica may be 0 part by weight, since the amount of the CB containing silica is 10 to 55 parts by weight. In an amount of carbon black and/or silica, an amount of carbon black is 0 to 45 parts by weight, preferably 5 to 45 parts by weight, particularly 10 to 35 parts by weight and/or an amount of the silica is 0 to 45 parts by weight, preferably 5 to 50 parts by weight, particularly 10 to 35 parts by weight, so that an amount of the CB containing silica is 10 to 55 parts by weight, preferably 20 to 45 parts by weight, and an amount of the carbon and/or silica and the CB containing silica is 40 to 60 parts by weight, preferably 45 to 55 parts. Rolling resistance tends to become high with increasing the amount of the carbon black, and abrasion resistance tends to become low with increasing the amount of the silica. Preferably, the amount of the carbon black is at least 10 parts by weight from the viewpoint of abrasion resistance, and the amount of the silica is at least 10 parts by weight from the viewpoint of rolling resistance.

Abrasion resistance, rolling resistance and the like may be improved by further adding a silane coupling agent to the rubber composition of the present invention for a tyre tread comprising a rubber component, CB containing silica and carbon black and/or silica as an option.

Examples of the above-mentioned silane coupling agents is, for example, vinyltrichlorosilane, vinyltrimethoxysilane, vinyltriethoxysilane, vinyltrist (β-methoxyethoxy)silane, β-(3,3-epoxycyclohexyl)ethyltrimethoxysilane, γ-glycidoxypropyltrimethoxysilane, γ-glycidoxypropylmethyldiethoxysilane, γ-glycidoxypropyltriethoxysilane, γ-methacryloxypropylmethyldimethoxysilane, γ-methacryloxypropyltrimethoxysilane, γ-methacryloxypropylmethyldiethoxysilane, γ-methacryloxypropyltriethoxysilane, N-β(aminoethyl)γ-aminopropylmethyldimethoxysilane, N-β(aminoethyl)γ-aminopropyltrimethoxysilane, N-β(aminoethyl)γ-aminopropyltriethoxysilane, γ-aminopropyltrimethoxysilane, γ-aminopropyltriethoxysilane, N-phenyl-γ-aminopropyltrimethoxysilane, γ-chloropropyltrimethoxysilane, γ-mercaptopropyltrimethoxysilane, bis[3-(triethxysilyl)propyl)]tetrasulfene and the like. These can be employed solely or in a combination use of two or more thereof. Among the, bis[3-(triethoxysilyl)propyl]tetrasulfene or the like is preferable.

The amount of the above-mentioned silane coupling agent is a total amount of 2 to 6% by weight, preferable 3 to 5% by weight, based on the CB containing silica and 6 to 10% by weight, preferably 7 to 9% by weight, based on the silica. If the amount of the silane coupling agent is smaller than the above-mentioned minimum, performances such as abrasion resistance and rolling resistance tend to lower. Also it is undesirable to use a larger amount of silane coupling agent than the above-mentioned maximum from the viewpoint of cost.

In the composition of the present invention, a composition comprising at least a rubber component, CB containing silica, silica, carbon black and a silane coupling agent is the most preferable.

In the composition, the amount of CB containing silica is 10 to 55 parts by weight, preferably 10 to 40 parts by weight and particularly 10 to 30 parts by weight based on 100 parts by weight of a rubber component. If the amount of the CB containing silica is at most 10 parts by weight, abrasion resistance is low, and if the amount is at least 55 parts by weight, rolling resistance is excellent, but abrasion resistance is low.

The total amount of CB containing silica, silica and carbon black is 40 to 60 parts by weight, preferably 45 to 55 parts by weight. If the amount is less than 40 parts by weight, rolling resistance is excellent, but abrasion resistance is very low. On the contrary, if the amount is more than 60 parts by weight, abrasion resistance is excellent, but rolling resistance increases.

The amount of the silane coupling agent is the total amount of 2 to 8% by weight based on carbon black containing silica and 6 to 12% by weight based on silica, preferably 3 to 8% by weight based on carbon black containing silica and 7 to 12% by weight based on silica. If the amount of the silane coupling agent is too small, both abrasion resistance and rolling resistance are not sufficient, and if the amount is too large, abrasion resistance is low without efficiency obtained by adding the coupling agent.

To the composition of the present invention, there can be added conventional components and additives generally employed in the preparation process of a rubber composition for tyre treads in addition to the above-mentioned components in a suitable amount. Examples thereof are, for example, process oil (paraffin process oil, naphthene process oil, aromatic process oil), a vulcanising agent (sulfur, a chlorinated sulfur compound, an organic sulfur compound and the like), a vulcanisation accelerator (guanidine type, an aldehyde-amine type, an aldehyde-ammonia type, a thiazole type, a sulfeneamide type, a thiourea type, a thiuram type, a dithiocarbamate type, Xanthates compound), a crosslinking agent (a radical generator such as an organic peroxide compound, or an azo compound, an oxime compound, a nitroso compound, a polyamine compound and the like), a reinforcing agent (a high-styrene resin, a phenol-formaldehyde resin and the like), an antioxidant or an anti-aging agent (an amine derivative such as a diphenylamine type or a p-phenylenediamine type, a quinoline derivative, a hydroquinone derivative, monophenols, diphenols, thiobisphenols, hindered phenols, phosphorous acid esters), a wax, stearic acid, zinc oxide, a softening agent, a filler, a plasticiser and the like.

Preferably the composition of the present invention can be suitably employed for a heavy duty tyre, since abrasion resistance under heavy load is particularly excellent. A heavy duty tyre means an aeroplane tyre, a bus tyre, a truck tyre and the like. Among those the composition of the present invention is preferably employed for a bus tyre or a truck tyre from the viewpoint of severe demand for lowering rolling resistance.

### EXAMPLES

The present invention is further explained in details based on the Examples concretely, but is not limited thereto.

"Parts" and "%" means "parts by weight" and "% by weight" respectively, unless otherwise specified.

Materials used in EXAMPLES and COMPARATIVE EXAMPLES and evaluation tests are shown as follows.
NR-RSS #3 grade for general use
Carbon black containing silica - CRX 2000 available from Cabot Corporation; N-234 carbon black containing 4.7% of silica; and adsorption amount of DBP: 113 cc/100g; an adsorption amount of CDBP: 102 cc/100g.
Silica - Ultrasil VN 3 available from Deggusa Co Ltd.
Carbon black
   N 220 available from Mitsubishi Chemical Corporation; Diablack 1 (N220) of ISAF carbon
   N 351 available from Showa Cabot Co Ltd; Showblack (N351) of HAF carbon black
Silane coupling agent - Si169 available from Deggusa Co Ltd; bis(3-triethoxysilylpropyl)tetrasulfene
Antioxidant - Ozonone 6C available from Seiko Chemical Co Ltd.
Wax - Sannowax available from Ohuchi Shinko Kagakyu Kogyo Co Ltd.
Stearic acid - Kiri available from NOF Corporation
Zinc oxide - Ginrei R available from Toho Zinc Co Ltd
Vulcanisation accelerator - NOCCELER NS available from Ohuchi Shinko Kagaku Kogyo Co Ltd; N-tert-butyl-2-benzothiazolylsulphene amide.

### Abrasion Resistance

A vulcanised rubber was prepared from a prescribed rubber composition for the tyre tread. A test was carried out at a surface rotating speed of 50 m/min, an amount of falling sands of 15 g/min and a slip ratio of 25% under low severe condition (load of 2.5 kg) or high severe condition (5.0 kg of load) employing a Lambourn abrasion test machine made by Iwamoto Seisakusho Co Ltd. All the results were shown employing an index based on the value in the following Comparative Example 1 as 100. If the index becomes large, the abrasion resistance becomes excellent.

### Loss Tangent (Viscoelasticity Test)

A rubber composition for the tyre tread was vulcanised at 150°C and 20 kgf for 45 minutes to prepare a tyre of 11R22.5 for a truck.

A test piece was prepared from the tread of the obtained new tyre. The lost tangent (tan δ) at 60°C was measured under a condition of frequency 10 Hz and dynamic strain 1.0% employing a viscoelasticity spectrometer made by Iwamoto Seisakusyo Co Ltd. If tan δ becomes low, the performance becomes excellent and low-fuel efficiency becomes possible.

### Hardness

The tread hardness of the new tyre was measured at 25°C by employing a JIS-A hardness meter.

### Rolling Resistance

The rolling resistance of the tyre prepared in the same process as in the Loss Tangent Test was measured at a speed of 80 km/h, load of 30 kN and internal pressure of 800 kPa employing a test machine made by Kobe Steel Ltd. All results were shown employing an index based on the value for the following Comparative Example 1 as 100. The larger the index becomes, the smaller and the more excellent the rolling resistance becomes.

### Abrasion Road Test

A tyre for a truck having a four-divisional tread was experimentally prepared and a 10 ton truck was equipped with the tyre. After running 100,000 km, the residual tread was measured to compare abrasion resistance. All results were shown employing an index based on the value of the following Comparative Example 1 as 100. The larger the index becomes, the more excellent the abrasion resistance becomes.

### EXAMPLES 1 TO 18 AND COMPARATIVE EXAMPLES 1 TO 18

A composition comprising a prescribed amount of main components shown in Tables 1 to 3, 2 parts of antioxidant, a part of wax, 2 parts of stearic acid and 3 parts of zinc oxide was kneaded at about 150°C for five minutes by employing a Banbury mixer. The obtained mixture was kneaded with 1 part of sulfur and 1.5 parts of a vulcanisation accelerator at 80°C for about five minutes employing an open roll with twin screws to obtain a composition (green rubber composition for tyre tread). Then the composition was vulcanised at 150°C for 45 minutes to obtain the vulcanised rubber. Finally the abrasion resistance was evaluated.

The above-mentioned green rubber composition for a tyre tread was vulcanised at 150°C and 20 kgf/cm² for 45 minutes to prepare a tyre of 11R22.5 for the truck. The tyre was evaluated based on loss tangent, hardness, rolling resistance and abrasion road test. Tables 1 to 3 show the results.

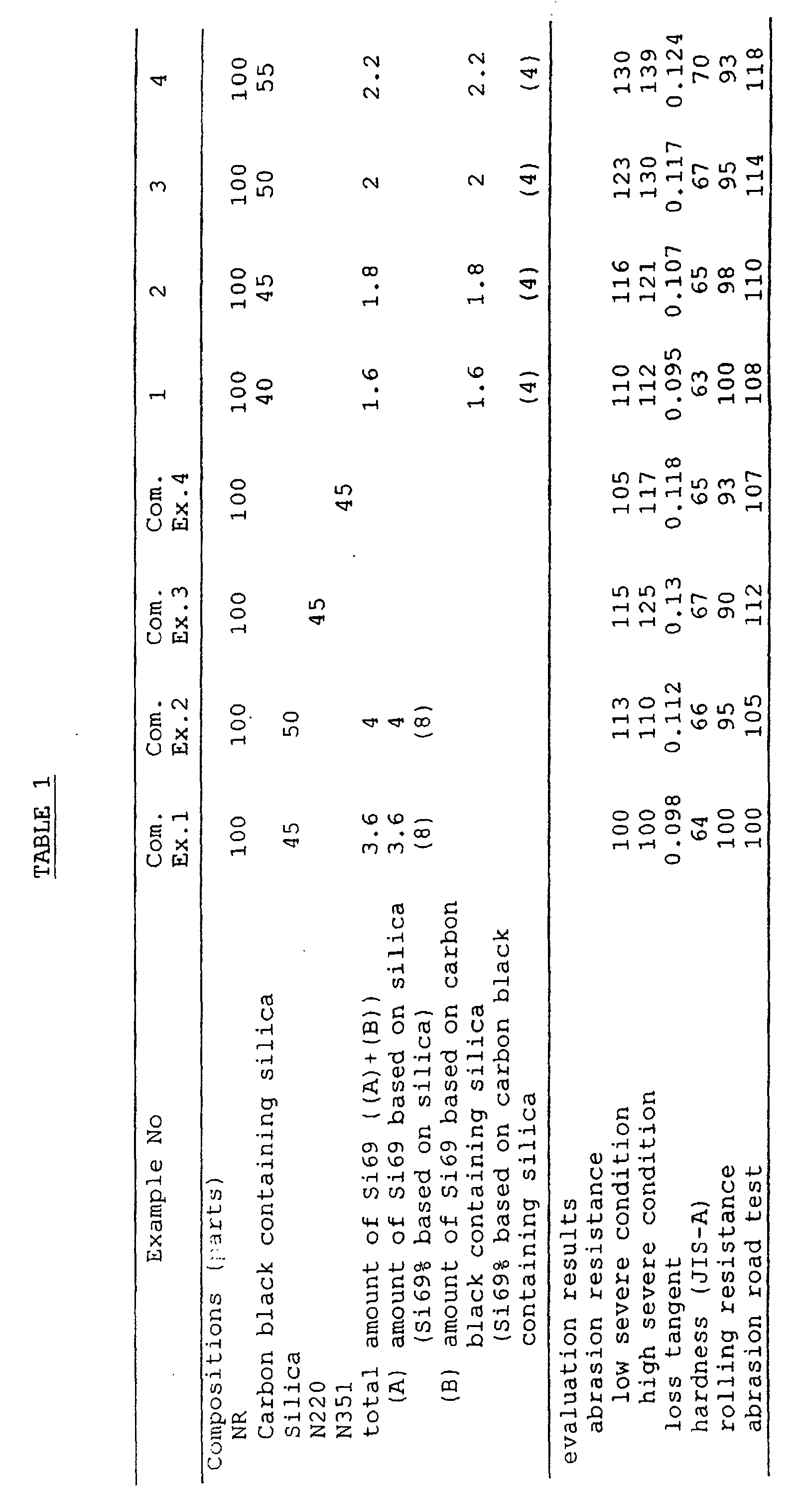

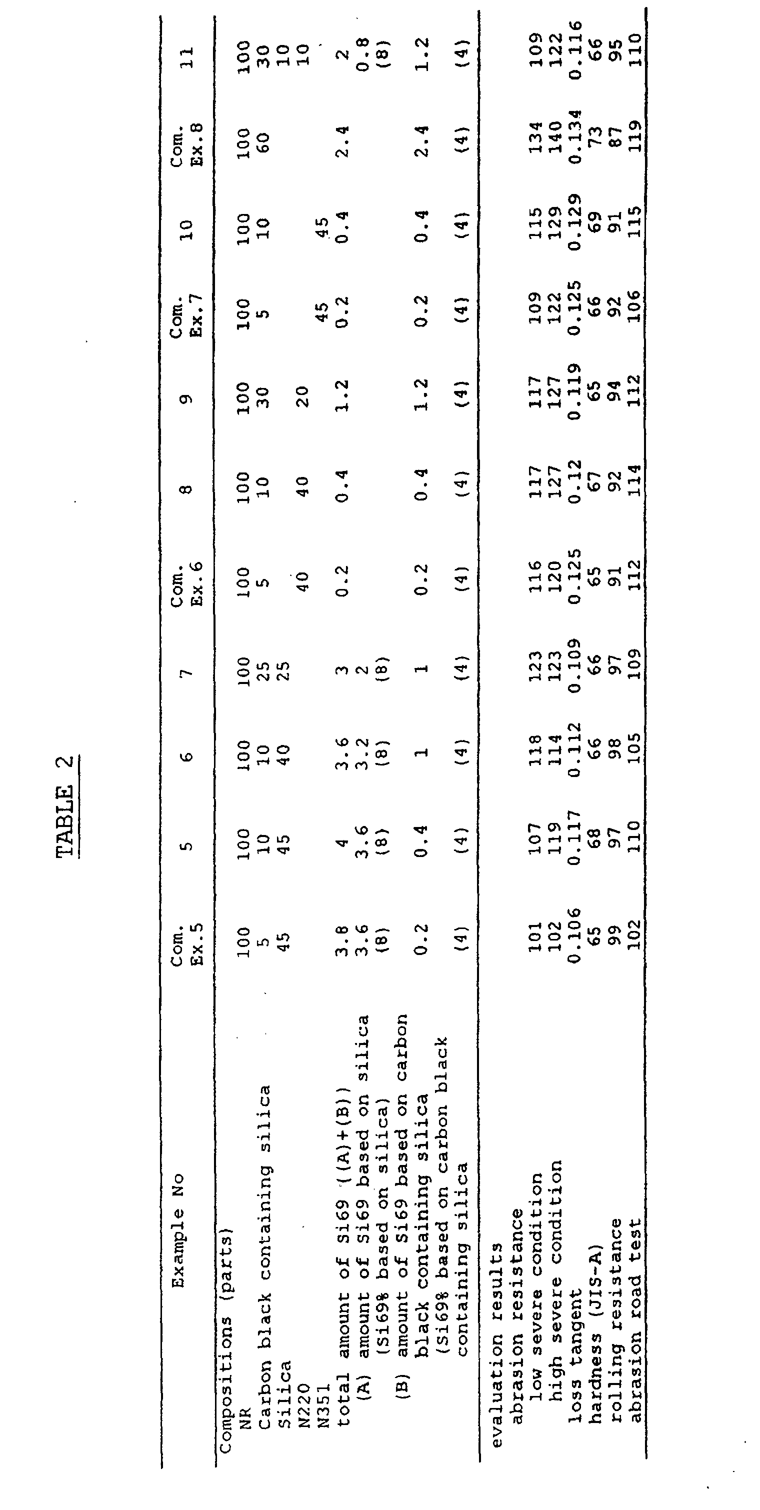

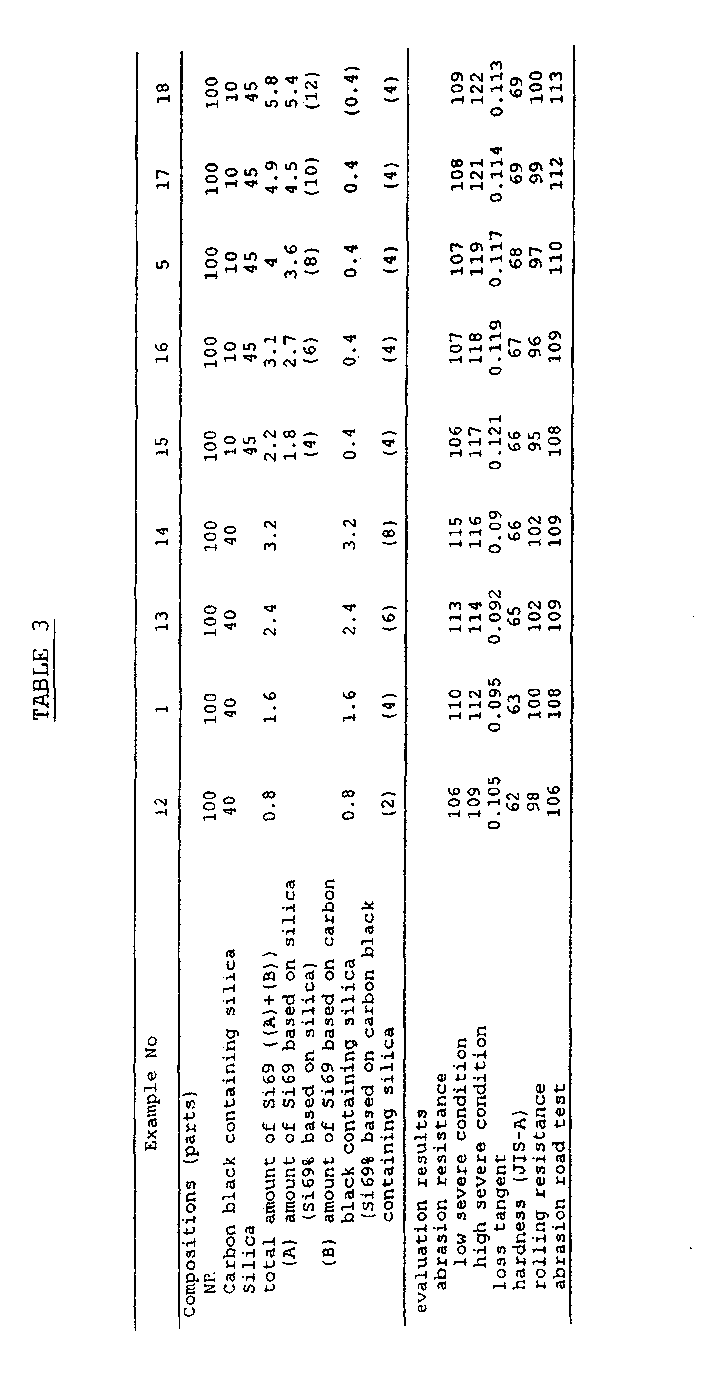

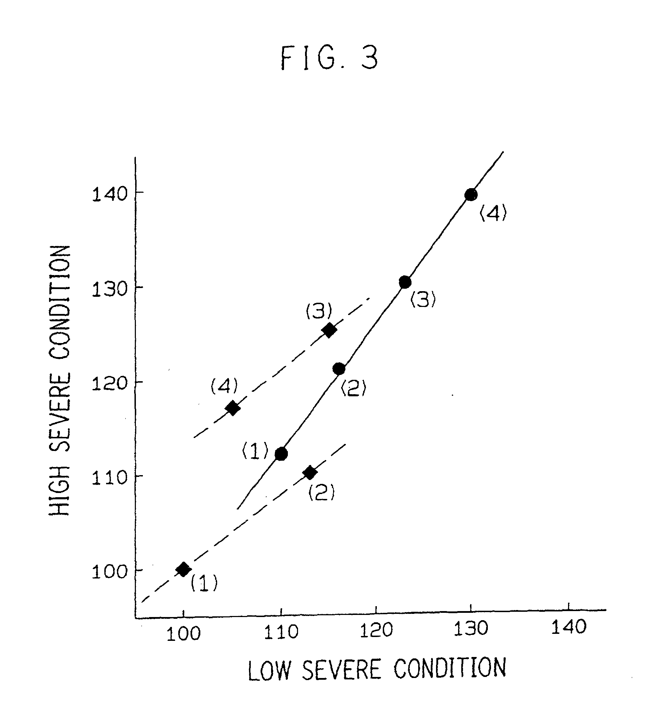

It can be seen from the comparison of Examples 1 to 4 with Comparative Examples 1 to 4 in Figure 2 that the balance between rolling resistance and abrasion resistance under the severe condition of a truck tyre were improved by employing CRX2000 instead of silica and carbon black, and it can be seen from the comparison of Examples 5 to 10 with Comparative Examples 1 to 4 in Figure 2 that both properties were improved even if silica, carbon black and CRX2000 are employed together. On the other hand, it can be seen from Comparative Examples 5 to 7 that properties can not sufficiently be improved if the amount is less than 10 parts by weight. From Examples 1 and 12 to 14, with respect to the amount of the coupling agent desired properties are obtained by adding 2 to 8% by weight thereof based on CRX2000. However, the addition of about 4% by weight is preferable from the viewpoint of property and cost balance. From Examples 5 to 15 to 18, desired properties were obtained by employing 4 to 12% by weight based on silica. The addition of 8% by weight is preferable from the viewpoint of property and cost balance. In Figure 2, the number in < > and the number in ( ) show the example number and the comparative example number respectively. Figure 3 shows a plot of abrasion resistance under high severity conditions against abrasion resistance under low severity conditions of Examples 1 to 4 and Comparative Examples 1 to 4. In Figure 3, the number in < > and the number in ( ) show the example number and the comparative example number respectively. From Figure 3, it can be seen that abrasion resistance under a high severity condition is improved by employing the carbon black containing silica employed in the present invention in comparison with the case of silica. Therefore, the composition of the present invention obtained by employing the carbon black containing silica can be preferably applied to a heavy duty tyre (truck or bus) employed under high severity conditions.

### EXAMPLES 11 AND 19 TO 26 AND COMPARATIVE EXAMPLES 9 TO 17

A comparison comprising a prescribed amount of main components shown in Table 4 to 3, 2 parts of antioxidant, 1 part of was, 2 parts of stearic acid and 3 parts of zinc oxide was kneaded at about 150°C for five minutes by employing a Banbury mixer. The obtained mixture was kneaded with 1 part of sulfur and 1.5 parts of a vulcanisation accelerator at 80°C for about five minutes employing an open roll with twin screws to obtain a composition (green rubber composition for tyre tread). Then the composition was vulcanised at 150°C for 45 minutes to obtain the vulcanised rubber (as five components consisting or rubber component, CB containing silica, silica, carbon black and silane coupling agent). The abrasion resistance thereof was evaluated.

The above-mentioned green rubber composition for the tyre tread was vulcanised at 150°C and 20 kgf for 45 minutes to prepare a tyre of 11R22.5 for a truck. The tyre was evaluated based on loss tangent, hardness, rolling resistance and abrasion by road test. Tables 4 to 6 show the results.

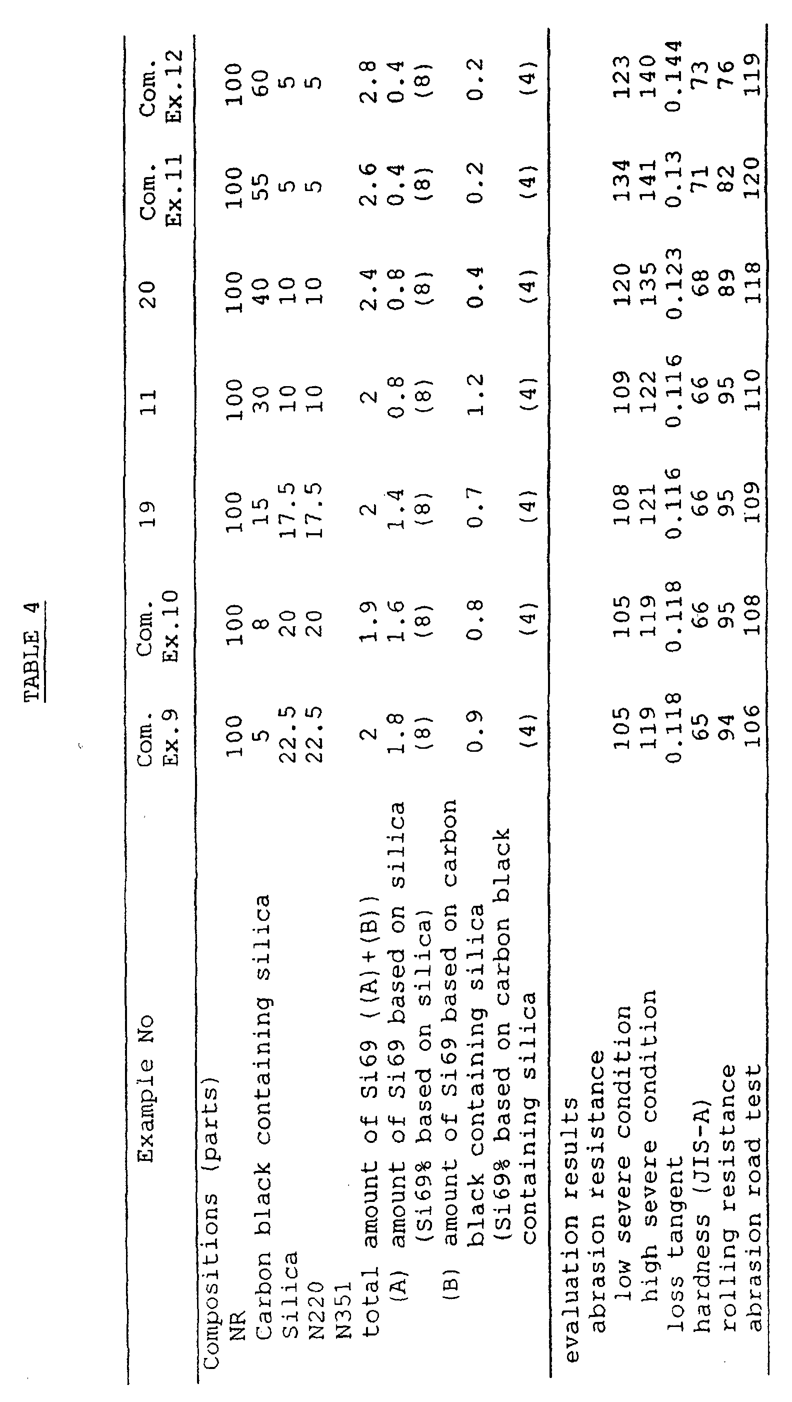

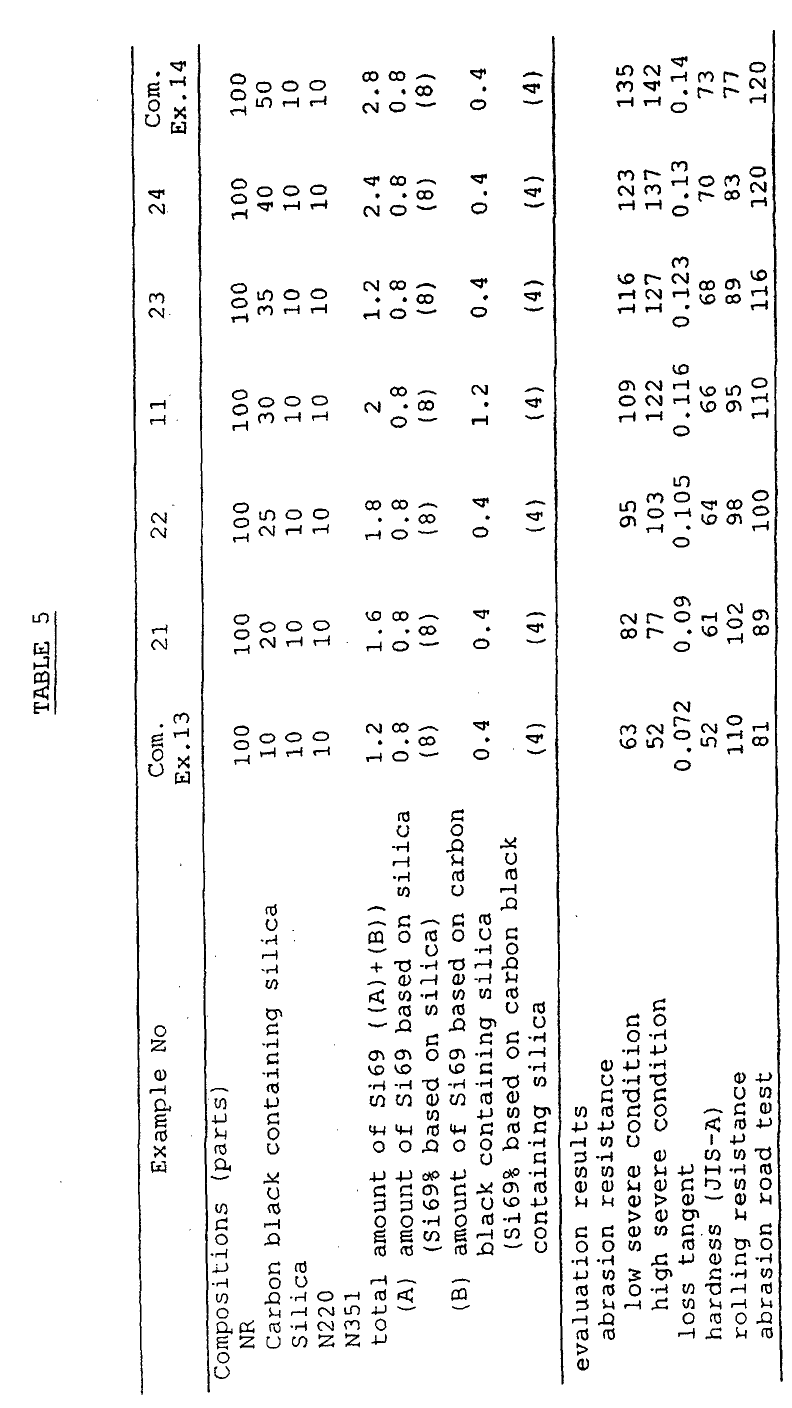

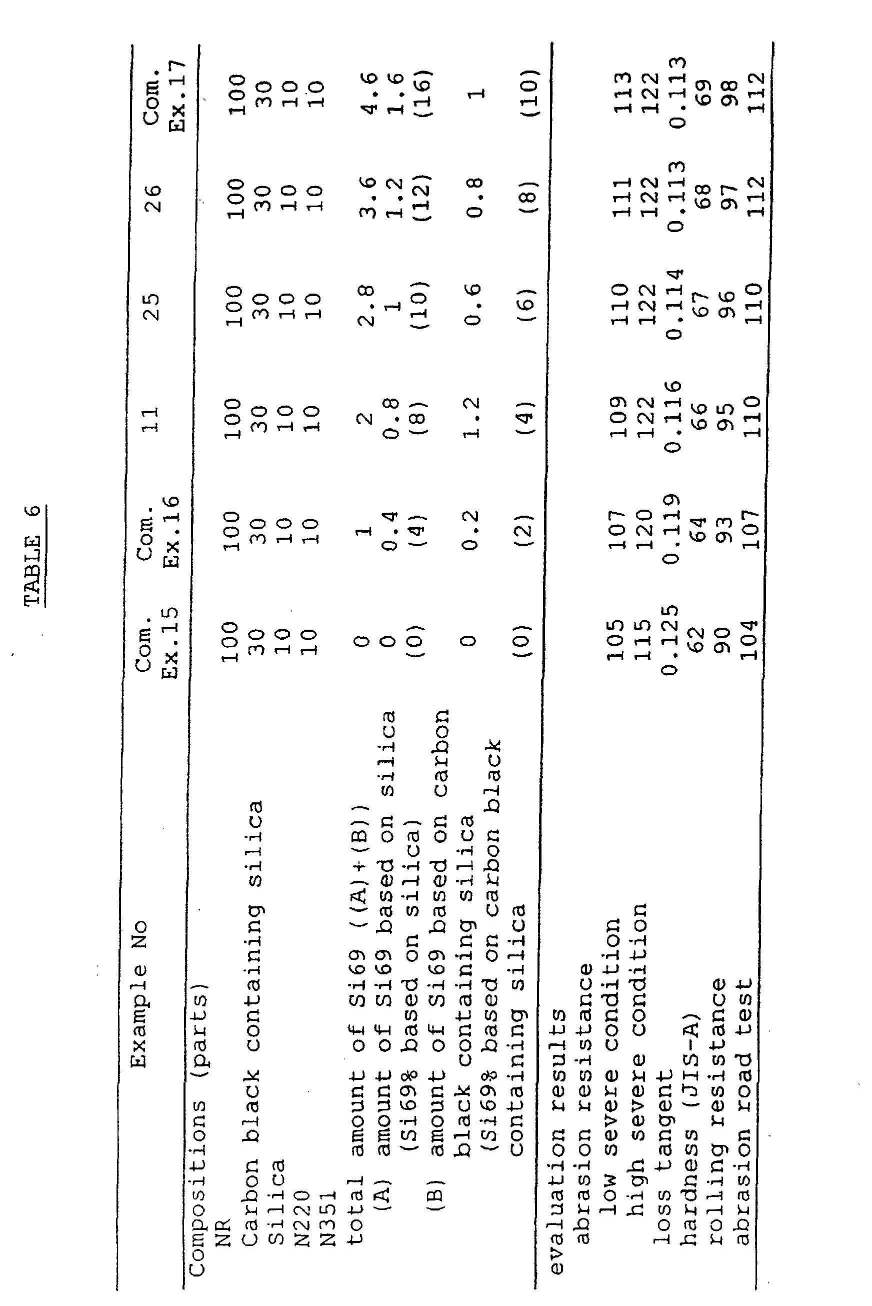

Compared with Comparative Examples 11 and 12, Examples 11, 19 and 20 are excellent in rolling resistance. Also Examples 11 and 21 to 24 are more excellent than Comparative Example 13 in abrasion resistance and then Comparative Example 14 in rolling resistance. Furthermore, Examples 11, 24 and 25 are more excellent than Comparative Examples 15 and 16 in both abrasion resistance and rolling resistance.

The present invention provides a rubber composition for a tyre tread having compatibility between low fuel consumption and abrasion resistance, especially abrasion resistance under severe conditions.

## Claims

1. A rubber composition for a tyre tread comprising 100 parts by weight of a rubber components, 10 to 55 parts by weight of carbon black containing silica, 5 to 50 parts by weight of carbon black, 5 to 50 parts by weight of silica, a silane coupling agent wherein a total amount of the carbon black, the silica and the carbon black containing silica is 40 to 60 parts by weight, and an amount of the silane coupling agent is a total amount of 2 to 8% by weight based on the carbon black containing silica and 6 to 12% by weight based on the silica.

2. A heavy duty tyre, which is obtained by employing the rubber composition for the tyre tread of claim 1.

## Patentansprüche

1. Kautschukzusammensetzung für einen Reifenlaufstreifen mit 100 Gewichtsteilen einer Kautschukkomponente, 10 bis 55 Gewichtsteilen Ruß, der Kieselsäure enthält, 5 bis 50 Gewichtsteilen Ruß, 5 bis 50 Gewichtsteilen Kieselsäure, einem Silankupplungsmittel, wobei eine Gesamtmenge des Rußes, der Kieselsäure und des Rußes, der Kieselsäure enthält, 40 bis 60 Gewichtsteile beträgt, und eine Menge des Silankupplungsmittels eine Gesamtmenge von 2 bis 8 Gew.-% auf der Grundlage des Rußes, der Kieselsäure enthält, und 6 bis 12 Gew.-% auf der Grundlage der Kieselsäure beträgt.

2. Schwerlastreifen, der durch Anwenden der Kautschukzusammensetzung für den Reifenlaufstreifen nach Anspruch 1 erhalten wird.

## Revendications

1. Composition de caoutchouc pour une bande de roulement de pneu comprenant 100 parties en poids de composants de caoutchouc, 10 à 55 parties en poids de noir de carbone contenant de la silice, 5 à 50 parties en poids de noir de carbone, 5 à 50 parties en poids de silice, un agent de couplage silane, dans laquelle une quantité totale du noir de carbone, de la silice et du noir de carbone contenant de la silice est de 40 à 60 parties en poids, et une quantité d'agent de couplage silane est une quantité totale de 2 % à 8 % en poids basée sur le noir de carbone contenant de la silice et de 6 % à 12 % en poids basée sur la silice.

2. Pneu à usage industriel, qui est obtenu en employant la composition de caoutchouc pour bande de roulement selon la revendication 1.
